# EUROPÄISCHE PATENTANMELDUNG

(11) **EP 1 142 740 A1**
(43) Veröffentlichungstag der Anmeldung: **10.10.2001**
(21) Anmeldenummer: 01107856.5
(22) Anmeldetag: 09.04.2001
(51) Int. Cl.: B60J 10/00

(54) **Glasscheibe mit Kunststoff-Umrandung**

(30) Priorität: 07.04.2000 DE 20006330 U
(71) Anmelder: BBG Braunsberger GmbH & Co. KG, 87719 Mindelheim (DE)
(72) Erfinder: Brandner, Hans, 85221 Dachau (DE)
(74) Vertreter: Fiener, Josef

(57) **Zusammenfassung**

Zur Vereinfachung der Montage einer Glasscheibe mit Kunststoff-Umrandung (2), insbesondere mit einem umschäumten Rahmen aus PU-Schaum, und einer Randabdichtung (3) mit einer Dichtschnur (5), wird vorgeschlagen, daß in der Kunststoff-Umrandung (2) eine im wesentlichen senkrecht zur Hauptfläche der Glasscheibe (1) ausgerichtete, hinterschnittene Nut (3a) ausgebildet ist, in die die Dichtschnur (5) eindrückbar ist.

## Beschreibung

Die Erfindung betrifft eine Glasscheibe mit Kunststoff-Umrandung, insbesondere mit einem umschäumten Rahmen aus PU-Schaum, und einer Randabdichtung mit einer Dichtschnur.

Derartige Glasscheiben mit Kunststoff-Umrandung werden im Fahrzeugbau als feststehende Scheiben, insbesondere als Seitenscheiben, in die Fahrzeugkarosserie über Schraubbolzen eingesetzt. Dabei ist eine Randabdichtung vorhanden, damit keine Feuchtigkeit oder Wasser in den Fahrzeuginnenraum eindringen kann. So wird im allgemeinen auf die Innenseite der Glasscheibe eine Dichtungsschnur aufgeklebt, welche dann beim Einsetzen über die Schraubbolzen gegen eine fahrzeugfeste Dichtkontur in der Fahrzeugkarosserie gepreßt wird. Im Falle von Seitenscheiben ist hierzu die Karosserie im allgemeinen geringfügig nach innen gewölbt, damit die Seitenscheibe im eingesetzten Zustand dann im wesentlichen bündig mit der Karosserieflanke ist.

Eine weitere Möglichkeit der Befestigung von Scheiben an der Fahrzeugkarosserie besteht in der sog. Verklebung. Hierbei dient der Klebstoff gleichzeitig zur Fixierung und Abdichtung. Diese Vorgehensweise wird im allgemeinen für Front- und Heckscheiben, aber auch für feststehende Verglasungen im Fahrzeugdach verwendet.

Bei der letztgenannten Vorgehensweise ist nachteilig, daß die Klebefläche auf der umspritzten oder umschäumten Glasscheibe vorbehandelt werden muß, um eine saubere Klebung zu erreichen. Zudem ist der Auftrag des Klebstoffes aufwendig, da eine genaue Dosierung und Positionierung der Klebstoffspur (Kleberaupe) erforderlich ist. Weiterhin ist eine Fixierung der eingesetzten Glasscheibe bis zur Aushärtung erforderlich, was den Montagefluß im Herstellerwerk verlangsamt. Somit sind die Kosten einer derartigen Scheibenverklebung relativ hoch.

Bei der erstgenannten Alternative mit eingesetzten Schraubbolzen und einer Dichtungsschnur ist ebenfalls nachteilig, daß die Klebefläche auf der kunststoffumrandeten Glasscheibe vorbehandelt werden muß. Zudem muß vor dem Aufkleben der Dichtungsschnur eine den Klebefilm schützende Schutzschicht abgezogen werden, was den Arbeitsaufwand erhöht. Somit sind auch hier die Gesamtkosten relativ hoch, zumal diese Klebe-Dichtschnur im allgemeinen eine Spezialanfertigung und daher relativ teuer ist.

Demzufolge liegt der Erfindung die Aufgabe zugrunde, eine Glasscheibe mit Kunststoff-Umrandung zu schaffen, wobei die vorstehenden Nachteile vermieden werden und insbesondere eine einfache und kostengünstige Montage erreicht wird.

Diese Aufgabe wird gelöst durch eine Glasscheibe mit Kunststoff-Umrandung gemäß den Merkmalen des Anspruches 1. Vorteilhafte Ausführungsformen sind Gegenstand der Unteransprüche.

Bei der vorgeschlagenen Glasscheibe mit Kunststoff-Umrandung wird eine im wesentlichen senkrecht zur Hauptfläche der Glasscheibe ausgerichtete, hinterschnittene Nut ausgebildet, in die die Dichtschnur eindrückbar ist. Die hinterschnittene Nut wird dabei bevorzugt bei der Kunststoff-Umrandung in einem Formvorgang mit angespritzt oder angeschäumt. Die Kunststoff-Umrandung ist dabei gleichzeitig so ausgelegt, daß diese die Anschlag- oder Positionierfläche beim Einsetzen in das Fahrzeug bildet. Gegen diese wird die Glasscheibe beim Verschrauben gezogen oder beim Einkleben gedrückt, so daß eine exakte Positionierung erreicht wird. Zudem gelangt hierbei die in die hinterschnittene Nut eingedrückte Dichtschnur in Anlage an die Karosserie, so daß hierdurch eine sorgfältige Abdichtung erreicht wird.

Gegenüber der bisher bekannten, aufzuklebenden Dichtschnur kann die hier vorgeschlagene, in die Nut einzudrückende Dichtschnur mit Rundquerschnitt als kostengünstige Standard- oder Meterware bezogen werden. Die Montage ist dabei auch einfacher und schneller zu bewerkstelligen als das Aufkleben der Dichtschnur. Es sei darauf hingewiesen, daß durch das Eindrücken der Dichtschnur in die hinterschnittene Nut eine vorstehende, tropfenförmige Dichtlippe gebildet wird, wodurch ein besonders guter Abdichteffekt erreicht wird.

Nachfolgend wird ein Ausführungsbeispiel der Erfindung näher beschrieben und erläutert:. Hierbei zeigen:
- Fig. 1: eine Glasscheibe mit Kunststoff-Umrandung im Querschnitt; und
- Fig. 2: eine vergrößerte Perspektivdarstellung beim Einlegevorgang der Dichtschnur.

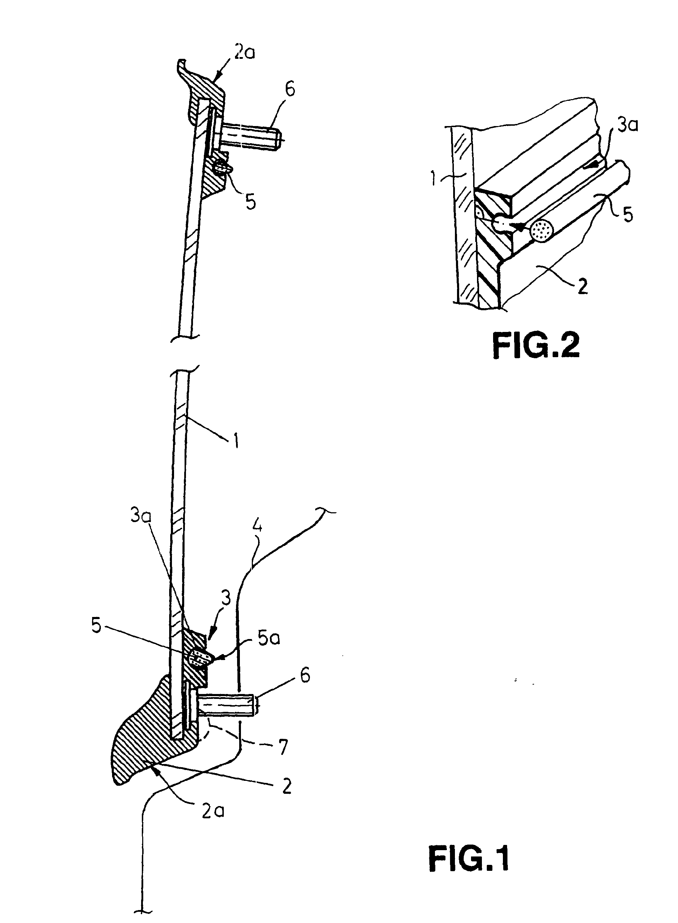

In Fig. 1 ist eine Glasscheibe 1 im Querschnitt dargestellt, wie sie beispielsweise als Seitenscheibe in einem Fahrzeug eingesetzt wird. Die Glasscheibe 1 weist eine Kunststoff-Umrandung 2 auf, die mit einer Randabdichtung 3 versehen ist. Diese Randabdichtung 3 weist somit zum Fahrzeuginneren hin. In der Randabdichtung 3 ist eine hinterschnittene Nut 3a ausgebildet, die somit ebenso im wesentlichen senkrecht zur Hauptfläche der Glasscheibe 1, also zum Fahrzeuginnenraum hin ausgerichtet ist. Mittels der Kunststoff-Umrandung 2 und der Randabdichtung 3 ist die Glasscheibe 1 in die Karosserie 4 des Fahrzeuges einsetzbar. Die Karosserie 4 ist hierbei etwas abgestuft ausgeführt, so daß die Glasscheibe 1 im montierten Zustand im wesentlichen bündig zur Karosserie ist.

Wie auch in Fig. 2 dargestellt, kann eine einfache Dichtschnur 5 mit Rundquerschnitt in die hinterschnittene Nut 3a eingedrückt werden, wobei der Querschnitt der Nut 3a kleiner ist als der Querschnitt der Dichtschnur 5. Hierdurch ergibt sich nach dem "Einklipsen" eine vorstehende, im Querschnitt tropfenförmige Dichtlippe 5a (vgl. Fig. 1). Dadurch wird eine besonders exakte Abdichtung erreicht.

In der Kunststoff-Umrandung 2, insbesondere aus PU-Schaum, sind zudem mehrere Insertschrauben 6 eingeformt, mit denen die Glasscheibe 1 in der Karosserie 4 sicher verankert werden kann. Anstatt dieser Insertschrauben 6 kann auch eine Verklebung in Form einer Kleberaupe 7 erfolgen, wie dies in Strichlinien angedeutet ist. Es sei darauf hingewiesen, daß in beiden Fällen durch die Abschrägung bzw. konische Außenform 2a der Kunststoff-Umrandung eine exakte Positionierung innerhalb der Karosserie 4 des Fahrzeuges bei der Montage erfolgt. Insgesamt wird somit durch das einfache Eindrücken bzw. Einklipsen der Dichtschnur 5, die insbesondere aus relativ weichem Moosgummi besteht, eine einfache und kostengünstige Montage der Glasscheibe 1 zum Einsatz als feststehende Scheibe (Seitenscheibe, Heckscheibe, Dachscheibe usw.) erzielt.

## Patentansprüche

1. Glasscheibe mit Kunststoff-Umrandung (2), insbesondere mit einem umschäumten Rahmen aus PU-Schaum, und einer Randabdichtung (3) mit einer Dichtschnur (5),
**dadurch gekennzeichnet, daß**
in der Kunststoff-Umrandung (2) eine im wesentlichen senkrecht zur Hauptfläche der Glasscheibe (1) ausgerichtete, hinterschnittene Nut (3a) ausgebildet ist, in die die Dichtschnur (5) eindrückbar ist.

2. Glasscheibe nach Anspruch 1, **dadurch gekennzeichnet, daß** in die Kunststoff-Umrandung (2) mehrere Insertschrauben (6) miteingespritzt/-geschäumt sind.

3. Glasscheibe nach Anspruch 1 oder 2, **dadurch gekennzeichnet, daß**
die Kunststoff-Umrandung (2) als Anschlagfläche (2a) gegenüber der Karosserie (4) eines Fahrzeuges ausgebildet ist.

4. Glasscheibe nach Anspruch 3, **dadurch gekennzeichnet, daß** die Anschlagfläche (2a) der Kunststoff-Umrandung (2) eine im wesentlichen konische Außenform aufweist.

5. Glasscheibe nach einem der Ansprüche 1-4, **dadurch gekennzeichnet, daß**
der Querschnitt der Nut (3a) kleiner ist als der Querschnitt der Dichtschnur (5), so **daß** bei eingedrückter Dichtschnur (5) eine vorstehende Dichtlippe (5a) gebildet ist.

6. Glasscheibe nach einem der Ansprüche 1-5, **dadurch gekennzeichnet, daß**
die Dichtschnur (5) aus Gummimaterial besteht, insbesondere aus sog. Moosgummi.

7. Glasscheibe nach einem der Ansprüche 1-6, **dadurch gekennzeichnet, daß**
die Dichtschnur (5) bis auf eine Stoßstelle einstückig umlaufend pro Glasscheibe (1) ausgebildet ist.

8. Glasscheibe nach einem der Ansprüche 3-7, **dadurch gekennzeichnet, daß**
die Kunststoffumrandung (2) in die Karosserie mittels einer Kleberaupe (7) eingeklebt ist.

9. Glasscheibe nach Anspruch 8, **dadurch gekennzeichnet, daß** die Kleberaupe (7) und die Dichtschnur (5) im wesentlichen parallel zueinander verlaufend angeordnet sind.

10. Glascheibe nach einem der Ansprüche 1-9, **dadurch gekennzeichnet, daß**
die Nut (3a) mit Umspritzung/Umschäumung der Kunststoff-Umrandung (2) in einem Formvorgang gefertigt ist.
